(19) Europäisches Patentamt
European Patent Office
Office européen des brevets

(11) EP 4 660 597 A1

(12) EUROPEAN PATENT APPLICATION

(43) Date of publication:
10.12.2025 Bulletin 2025/50

(51) International Patent Classification (IPC):
G01K 7/16 (2006.01)    G01K 7/42 (2006.01)
G01K 13/02 (2021.01)

(21) Application number: 24305903.7

(22) Date of filing: 07.06.2024

(52) Cooperative Patent Classification (CPC):
G01K 7/16; F16L 53/38; G01K 7/427; G01K 13/02;
G01K 2217/00

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: TechnipFMC Subsea France
92400 Courbevoie (FR)

(72) Inventors:
• LAZARCZYK, Michal
30-348 KRAKOW (PL)
• JEZ, Radoslaw
30-392 KRAKOW (PL)
• SITKO, Adam
30-552 KRAKOW (PL)

(74) Representative: Lavoix
2, place d'Estienne d'Orves
75441 Paris Cedex 09 (FR)

(54) A METHOD OF MONITORING A TEMPERATURE WITHIN A PIPE USING AT LEAST A CONDUCTIVE ELEMENT ARRANGED ALONG THE PIPE, RELATED SYSTEM AND INSTALLATION

(57) The method is for monitoring a temperature within a pipe (16) using at least one conductive element extending along the pipe (16), in particular an electric cable (18) arranged along the pipe (16) or at least a tubular metallic layer of the pipe (16). The method is carried out by a temperature monitoring system (10), and comprises:

- determining a measured global electrical resistance of the at least one conductive element;
- calculating a measured global temperature of the at least one conductive element within the pipe (16) using the measured global electrical resistance of the at least one conductive element and an electrical model of the at least one conductive element.

FIG.1

EP 4 660 597 A1

**Description**

The present invention concerns a method of monitoring a temperature within a pipe using at least one conductive element extending along the pipe, in particular an electric cable arranged along the pipe or at least a tubular metallic layer of the pipe, the method being carried out by a temperature monitoring system.

The method applies in particular to the monitoring of temperature within a pipe heated with electric cables, in particular electrically heated rigid pipes, notably Electrically Heat-Traced Pipe-in-Pipe (often referred to as "ETH-PiP").

It also applies to metallic rigid single pipe or pipe-in-pipe which are directly heated.

Offshore hydrocarbon recovery operations are increasingly moving into deeper water and/or more remote locations. Often, satellite wells are completed at the sea floor and tied to remote platforms or other facilities through extended subsea pipes.

The hydrocarbon fluids generally reach the subsea well at a much higher temperature than the temperature of the sea water near the sea floor. Then, the sea water tends to cool down the hydrocarbon fluids flowing along the pipe from the subsea well to the remote platform.

When the hydrocarbon fluids and any water present begin to cool, phenomena occur that may significantly affect fluid flow through the pipes. For example, some crude oils become very viscous. Deposits of paraffin or wax appear when the temperature of the oil drops, making the oil practically unable to flow. Hydrocarbon gas under pressure combines with water at reduced temperatures to form hydrates, which can plug pipes and are very difficult to remove.

Such flow assurance issues are generally addressed by using pipes comprising suitable thermal insulation layers. However, in very demanding applications, for example a combination of long tie-back (for example greater than 30 km) with cold sea water (e.g. around 5°C), passive insulation solutions cannot address the flow assurance issues. Active heating systems must then be used, such as ETH-PiP, as illustrated for example in OTC 21396.

The ETH-PiP disclosed in OTC 21396 comprises two concentric steel pipes separated by an annulus, the inner pipe being referred to as "flowline" and the outer pipe being referred to as "carrier pipe".

The annular space is dry and is almost fully filled with highly efficient thermal insulation material. Centralizers achieve the concentricity between both pipes.

The annulus also comprises electrical heating cables which are wound helically around the inner pipe under the thermal insulation layer. Heating is achieved through Joule resistive effect by circulating low frequency AC currents (around 50 Hz) along the heating cables. Heating could also be achieved with DC currents, but AC power supply, especially three-phases AC power supply is generally preferred, because it is easier to implement and less expensive.

When a three-phases AC power supply is used, the ETH-PiP comprises bundles of three heating cables, each heating cable conducting one of the three current phases, which are connected at the far end in star configuration. There is therefore no need for a return current path.

In recent subsea installations, the ETH-PiP often includes an optical fiber sensor which is used for temperature monitoring using distributed temperature sensing (DTS). The optical fiber is arranged in the annulus along the pipe. The optical fiber is connected to an optical reflectometer (e.g. a Raman optical reflectometer) which measures the temperature all along the fiber.

DTS systems, when used in combination with thermal models, can efficiently monitor fluid temperature inside the pipe, which provides information useful to control the heating system in order to avoid plugging the pipe.

However, DTS systems are complex to use and expensive, and they generally need to be put in place when manufacturing or installing the pipe.

Thus, in some installations, either due to technical limitations or to investment constraints, some or all of the pipes may not be instrumented with a DTS system to offer fluid temperature detection along the pipe.

Furthermore, some DTS systems do not always accurately measure the temperature of the heating electric cables and cannot ensure that the maximum operating temperature of the cable is not exceeded.

One aim of the invention is thus to provide a simple and cheap method of monitoring the temperature within an electrically heated pipe, which can be implemented while the pipe is already in service, and which can nevertheless provide accurate information to limit the risk of flow assurance issues.

To this aim, the subject matter of the invention is a method for monitoring a temperature of the above-mentioned type, comprising:

- determining a measured global electrical resistance of the at least one conductive element;
- calculating a measured global temperature of the at least one conductive element within the pipe using the measured global electrical resistance of the at least one conductive element and an electrical model of the at least one conductive element.

The method according to the invention may comprise one or more following features, taken solely, or according to any technical feasible combination:

- the electrical model relates the measured global electrical resistance of the at least one conductive element, a line electrical resistance of the at least one conductive element at a predefined temperature and a correction factor, which depends on the nature of the material constituting the at least one conductive element;

- the electrical model comprises the following equation :

$$T = T_0 + \frac{1}{\alpha} \times \left( \frac{Rt}{R_0} - 1 \right) (1)$$

wherein $R_0$ is line electrical resistance of the at least one conductive element at the predefined temperature To, calculating the global temperature of the at least one conductive element comprising using said equation to determine the measured global temperature T;

- the pipe comprises a plurality of electric cables, in particular three electric cables, determining a measured global electrical resistance of the at least one conductive element comprising calculating an average of the measured electrical resistances of each of the plurality of electric cables and setting the measured global electrical resistance of each conductive element to be equal to the average of the measured electrical resistances or comprising determining a maximum of the measured electrical resistances of each of the plurality of electric cables and setting the measured global electrical resistance of each conductive element to be equal to the maximum of the measured electrical resistances;

- determining the measured global electrical resistance comprises measuring an electrical resistance of the at least one conductive element with an electrical resistance measuring device while the at least one conductive element is deenergized;

- determining the measured global electrical resistance comprises measuring an impedance of the at least one conductive element, advantageously while the at least one conductive element is energized, and extracting a real part of the measured impedance to obtain the measured global electrical resistance;

- measuring the impedance comprises measuring a voltage applied to the at least one conductive element by a voltage sensor interposed between a power source and the at least one conductive element and measuring a current circulating in the at least one conductive element, using a current sensor arranged between the power source and the at least one conductive element;

- the method comprises the following steps:

  - measuring at least a punctual fluid temperature at one point of the pipe, in particular at one end of the pipe, using a temperature sensor;
  - using at least one thermal model to determine a set of local temperatures of the at least one conductive element in successive pipe sections along the pipe from the at least one punctual fluid temperature.

- the at least one thermal model comprises at least a flow assurance model configured to determine a fluid temperature and phase composition in each of the successive pipe sections from the at least one punctual fluid temperature;

- the at least one thermal model comprises a heat transfer model configured to determine a local temperature of the at least one conductive element in each of the successive pipe sections using the fluid temperature and phase composition in each of the successive pipe sections determined by the flow assurance model.

- the heat transfer model comprises a database of finite elements analysis sets of local temperature of the at least one conductive element in relation to predefined fluid temperatures and phase compositions, or comprises an analytical heat transfer model to determine a local temperature of the at least one conductive element in a pipe section as a function of a given fluid temperature and phase composition, or comprises a artificial intelligence heat transfer model determining a local temperature of the at least one conductive element in a pipe section as a function of a given fluid temperature and phase composition;

- using the at least one thermal model is done after a shut-down of fluid circulation in the pipe;

- the at least one thermal model uses a thermal power provided by the at least one conductive element when the at least one conductive element is energized;

- the method comprises :

  - determining a calculated global temperature of the at least one conductive element of the at least one conductive element in each of the successive pipe sections using the set of local temperatures of the at least one conductive element in successive pipe sections along the pipe;
  - comparing the measured global temperature of the at least one conductive element with the calculated global temperature of the at least one conductive element or comprises:

    - calculating a set of local electrical resistances of the at least one heating cable in each successive pipe section along the pipe using the local temperature of the at least one heating cable in the pipe section determined by the at least one thermal model and an electrical model;
    - integrating the set of local electrical resistances to determine a calculated global electrical resistance of the at least one heating cable;
    - comparing the calculated global electrical resistance with the measured global electrical resistance of the at least one heating cable;

- the pipe is without a distributed temperature sensor, in particular without an optic fiber distributed temperature sensor;
- the electric cable is a heating cable, the at least one conductive element being configured to be connected to an electrical power source to be energized;
- the conductive element extends over more than 10%, advantageously more than 50% of the length of the pipe, in particular over more than 80% of the length of the pipe.

The method also concerns a system to monitor a temperature within a pipe comprising at least one conductive element arranged along the pipe, in particular an electric cable arranged along the pipe or at least a tubular metallic layer of the pipe, the system comprising

- an electrical resistance determining module configured to determine a measured global electrical resistance of the at least one conductive element;
- a global temperature calculating module configured to calculate a measured global temperature of the at least one conductive element within the pipe using the measured global electrical resistance of the at least one conductive element and an electrical model of the at least one conductive element.

The system according to the invention may comprise one or more of the following features, taken solely or according to any technical feasible combination:

- a punctual temperature acquisition module configured to acquire at least a measured punctual fluid temperature at one point of the pipe, in particular at one end of the pipe, using a temperature sensor;
- a thermal model implementation module configured to use at least one thermal model to determine a set of local temperatures of the at least one conductive element in successive pipe sections along the pipe from the at least one punctual fluid temperature; the system comprising at least one of :

  - an electrical resistance integration module configured to calculate a set of local electrical resistances of the at least one conductive element in each successive pipe sections along the pipe using the local temperature of the at least one conductive element in the pipe section determined by the at least one thermal model and an electrical model, the electrical resistance integration module being configured to integrate the set of local electrical resistances to determine a calculated global electrical resistance of the at least one conductive element;
  - an electrical resistance comparison module configured to compare the calculated global electrical resistance with the measured global electrical resistance of the at least one conductive element; or

- a temperature integration module configured to determine a calculated global temperature of the at least one conductive element, using a set of local temperatures of the at least one conductive element in successive pipe sections along the pipe determined by the at least one thermal model;
- a temperature comparison module configured to compare the calculated global temperature with the measured global temperature of the at least one conductive element.

The method further comprises an installation, in particular an offshore fluid exploitation installation, comprising a pipe, at least one conductive element arranged along the pipe, the installation comprising a temperature monitoring system as defined above, and optionally wherein the at least one conductive element is a heating cable configured to heat the pipe, the installation optionally comprising a power source, the at least one heating cable being connected to the power source.

The invention will be better understood, based on the following description, given solely as an example, and made in reference to the following drawings in which:

- Figure 1 is a schematic view of a first installation comprising a pipe heated by at least an electrical heating cable arranged along the pipe, in which the method according to the invention is carried out;
- Figure 2 is a partially stripped-down perspective view of an example of electrically heated pipe, in which the method according to the invention is carried out;
- Figure 3 is a cross-sectional view of the pipe of figure 2;
- Figure 4 is a schematic view of a first temperature monitoring system to implement the monitoring method according to the invention;
- Figure 5 is a flowchart of a first monitoring method according to the invention to determine a global temperature of a heating cable within the pipe ;
- Figure 6 is a flowchart of a variant of the first monitoring method according to the invention, in which further steps are carried out to determine a set of local temperatures of a heating cable along the pipe;
- Figure 7 is a schematic view similar to figure 4 of another temperature monitoring system to implement the monitoring method according to the invention;
- Figure 8 is a schematic view of a second installation comprising a rigid single pipe heated by running an electrical current through the tubular metallic layer of the pipe via direct electric heating, in which the method according to the invention is carried out;
- Figure 9 is a schematic view of a second installation comprising a rigid pipe-in-pipe heated by running an electrical current through a first tubular metallic layer of the pipe-in-pipe and back through a second tubular metallic layer of the pipe-in-pipe via direct electric heating, in which the method according to the invention is carried out.

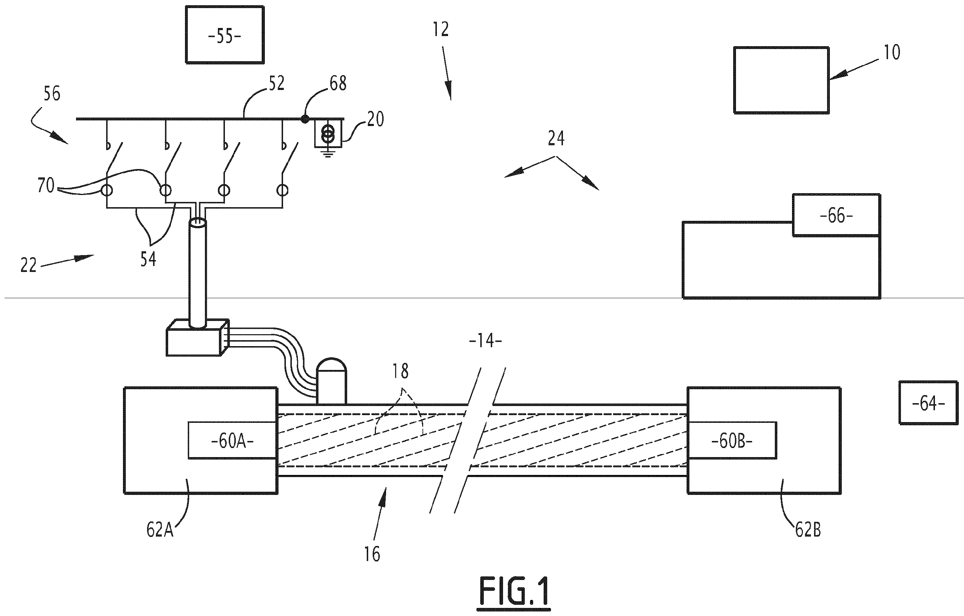

A first monitoring system 10 according to the invention is configured to be put in place and used in a fluid exploitation installation 12, whose relevant parts are schematically shown in figure 1.

The fluid exploitation installation 12 shown in figure 1, is located offshore, at least partly on the bottom of a body of water 14. In a variant (not shown), the fluid exploitation installation 12 is located onshore.

The fluid exploitation installation 12 comprises at least a pipe 16, which is here immersed in the body of water 14.

The fluid exploitation installation 12 further comprises at least one conductive element, here at least an electric cable. In this example, the fluid exploitation installation 12 comprises at least a heating cable 18, preferentially several heating cables 18, arranged along the pipe 16 to heat the fluid contained in the pipe 16.

It also comprises an electrical power source 20, preferentially located at the surface of the body of water 14, and an electrical power distribution system 22, connecting the electrical power source 20 to each heating cable 18.

The fluid exploitation installation 12 additionally comprises a sensor system 24, comprising several sensors to measure physical parameters at various locations in the installation 12, the monitoring system 10 being connected to the sensor system 24 to receive data from the sensors.

The body of water 14 is for example a lake, a river, an ocean, or a sea. The depth of the body of water 14 at the location of the fluid exploitation installation 12 is generally comprised between 50 m and 4000 m, most often between 100 m and 2500 m.

The fluid exploitation installation 12 is for example configured to produce a fluid, in particular hydrocarbons, notably oil and gas.

Thus, the fluid circulating in each pipe 16 is for example an injection fluid intended to be injected in a reservoir containing the fluid to be produced or preferably, a fluid produced from a reservoir and transported in the pipe 16 to be recovered at the surface of the body of water 14.

An example of pipe 16 is a rigid pipe. In particular, the pipe 16 is a pipe in pipe, notably an electrically heat-traced pipe-in-pipe (or "ETH-PiP").

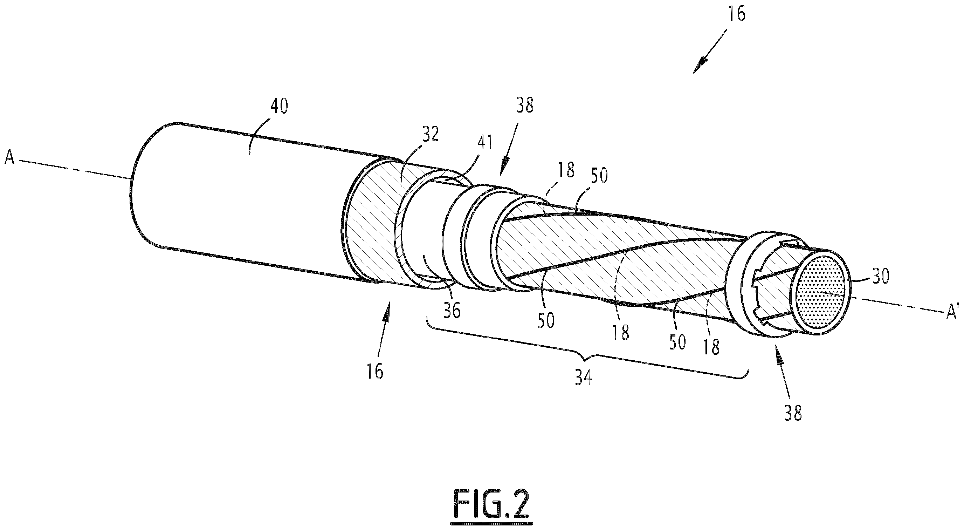

Such a pipe 16 is for example defined in the offshore standard DNV-ST-F101 "Submarine Pipe Systems", August 2021, established by the DNV (Det Norske Veritas)
An example of an electrically heat-traced pipe-in-pipe is schematically illustrated by figure 2. The pipe 16 comprises an inner flowline 30, made of a steel tubular line and an outer carrier pipe 32, concentric with the inner flowline 30, also made of a steel tubular line.

The inner flow line 30 defines an inner passage in which the fluid is transported between ends of the pipe 16.

The pipe 16 defines, between the inner flowline 30 and the outer carrier pipe 32, an annulus 34, containing at least a thermal insulation layer 36, several centralizers 38 arranged within the thermal insulation layer 36 to maintain the outer carrier pipe 32 concentric with the inner flowline 30. Advantageously, the pipe 16 further comprises an external coating layer 40 arranged on the outer surface of the outer carrier pipe 32.

The external coating layer 40 for example protects the outer carrier pipe 32 against the corrosion due to the sea water.

The annulus 34 is generally dry. It is almost fully filled with the thermal insulating material of the thermal insulation layer 36.

The thermal insulation layer 36 is for example made of mineral wool, aerogel, or microporous material.

The thermal conductivity of the thermal insulation layer 36 is generally smaller than 0.07 W/(m.K), preferably smaller than 0.04 W/(m.K), for example comprised between 0.015 W/(m.K) and 0.03 W/(m.K). The Overhall Heat Transfer Coefficient (OHTC) of the pipe 16 wall is preferably comprised between 1 W/(m$^2$.K) and 5 W/(m$^2$.K).

The centralizers 38 are generally located between longitudinal segments of the thermal insulation layer 36. They have an inner circumferential surface which applies on the outer surface of the inner flowline 30. The centralizers 38 are generally formed of two parts and are tightly mounted on the outer surface of the inner flowline 30.

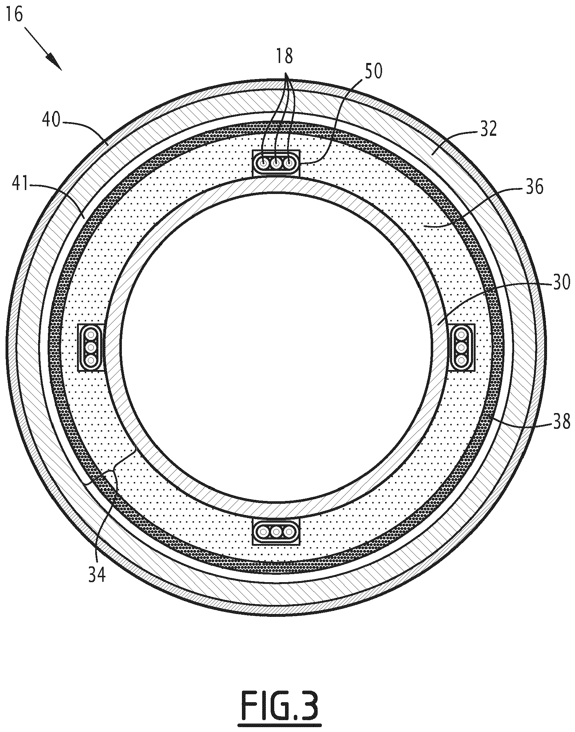

The centralizers 38 have an outer circumferential surface the diameter of which is smaller than the inner diameter of the outer carrier pipe 32, defining a gap 41 (see figure 3) which allows the insertion of the centralizers 38 inside the outer carrier pipe 32 during the manufacturing of the pipe 16.

Due to this gap 41, the centralizers 38 do not fully apply on the inner surface of the outer carrier pipe 32, but there are anyway contact points between both parts so that the centralizers 38 remain roughly coaxial with the outer carrier pipe 32.

The centralizers 38 generally define through-passages to let the heating cables 18 pass through.

The heating cables 18 are generally wound around the outer surface of the inner flowline 30, advantageously following a helical pattern, preferably with a long pitch.

The term "long pitch" is generally understood as having an helix angle between the longitudinal axis A-A' of the inner flowline 30 and the local angle of the helix comprised between 5° and 35°. The heating cables 18 are generally helically wound around the outer surface of the inner flowline 30 with a helix angle comprised between 10° and 20°, preferably of around 15°.

In the example of figure 3, the pipe 16 is equipped with several bundles 50 of heating cables 18, each bundle 50 comprising a plurality of heating cables 18 bundled together for example by a common outer sheath.

In the example of figure 2, each heating cable 18 comprises at least one resistive conductor generating heat by Joule effect, when an electrical current circulates along the conductor.

The conductor is for example made of copper, aluminum or of alloys of copper and/or of aluminum.

Advantageously, when the power source 20 provides a three-phase current, each bundle 50 comprises three heating cables 18 connecting at a distal end thereof opposed to the electrical power source 20 in a star configuration.

The electrical tension provided by the electrical power source 20 is generally applied between two of the three heating cables 18, whereas the third heating cable 18 equilibrates the currents circulating within the two heating cables 18, removing the need for a current return path.

The electrical power source 20 is preferably an AC power source, in particular a three-phase AC power source. In variant, the electrical power source 20 is a DC power source.

The electrical power delivered by the electrical power source 20 is generally greater than 5 W/m, in particular comprised between 10 W/m and 80 W/m.

The electrical power distribution system 22 advantageously comprises a transformer (not shown), connected to the outlet of the electrical power source 20, the transformer having a transformer outlet bus 52 generally delivering a tension to each conductor greater than 1000 V and advantageously comprised between 1200 V and 3800 V.

The electrical distribution system 22 further comprises a current transmission line for example embedded within an umbilical cable, the transmission line comprising several distribution feeder lines 54, each connected to a particular heating cable 18 to provide current to the heating cable 18.

The intensity of the current circulating in each heating cable is generally greater than 50 A and advantageously comprised between 50 A and 150 A.

Thus, each heating cable 18 is configured to deliver a thermal power greater than 5 W/m, in particular comprised between 10 W/m and 80 W/m.

In reference to figure 1, the electrical distribution system 22 also comprises a protection system having a protection relay 55 and a switching device 56 equipping each feeder line 54.

The sensor system 24 comprises at least a punctual fluid temperature and/or pressure sensor 60A, 60B located at a particular point of the pipe 16.

In the example of figure 1, it comprises an inlet fluid temperature and/or pressure sensor 60A measuring the temperature and/or pressure of the fluid at the inlet of the pipe 16 and advantageously, an outlet fluid temperature and/or pressure sensor 60B measuring the temperature and/or pressure of the fluid at the outlet of the pipe 16.

Advantageously, the inlet temperature and/or pressure sensor 60A is located at the pipe base 62A, while the outlet fluid temperature and/or pressure sensor 60B is located at the manifold or pipeline termination 62B.

In the example of figure 1, the sensor system 24 further comprises a multi-phase flow meter 66 to determine a flow rate of the fluid flowing through the pipe 16, as well as a phase composition of the fluid including a gas to oil ratio (GOR) and a water cut (WC).

According to an embodiment (not shown in figure 1), the multi-phase flow meter is a conventional physical system, for example connected to the pipe 16.

The physical multi-phase flow meter 66 is for example mounted on a Christmas tree connected to a manifold feeding fluid to the pipe 16 or recovering fluid from the pipe 16.

In the example of figure 1, the multi-phase flow meter 66 comprises a virtual flow meter, configured to determine the flow rate and the phase composition based on a physical multi-phase flow meter located away from the pipe 16, using the pressure and temperature measurements obtained through the sensors 60A, 60B at the inlet and outlet of the pipe 16.

The sensor system 24 further comprises an external temperature sensor 64, to measure a temperature of the environment around the pipe 16, in particular a water temperature in the body of water 14 around the pipe 16.

The sensor system 24 also comprises electrical parameters sensors, in particular a voltage sensor 68, configured to measure a tension applied to each heating cable 18. The voltage sensor 68 is preferably located downstream of the transformer, for example on the transformer output bus 52.

The sensor system 24 further comprises at least a current sensor 70 measuring the current circulating in each heating cable 18.

The current sensor 70 is for example located on each feeder line 54. It is for example made of a current transducer, of an electromagnetic field probe or of Rogowski coils.

The voltage sensor 68 and the current sensors 70 are advantageously used to control the switching devices 56.

In a variant, the sensor system 24 may comprise additional electrical resistance and/or impedance measuring systems, which are configured be connected to the heating cables 18 and to function when the heating cables 18 are deenergized.

In case the electrical power source 20 is a DC source, the electrical resistance measurement device may comprise an ohmmeter or may utilize the two-wire or preferably the four-wire method using an ammeter, and a voltmeter.

In case the electrical power source 20 is an AC source, the measurement device is an impedance analyzer or a dedicated measurement setup using current, voltage and phase shift measurements.

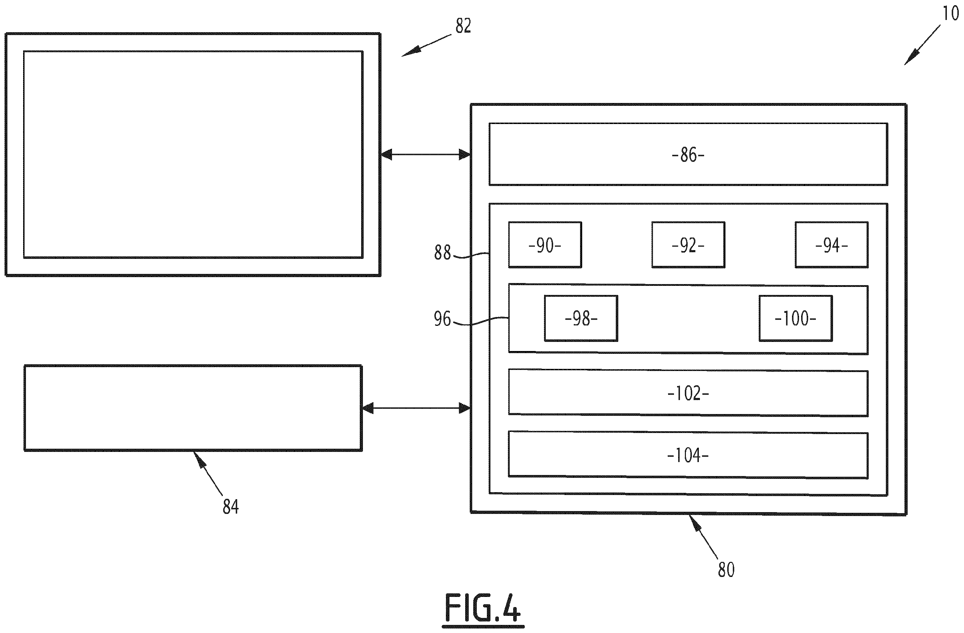

The temperature monitoring system 10 is schematically shown in figure 4. It comprises a calculator 80, configured to calculate at least a global temperature T within the pipe 16 from an electrical resistance measurement Rt of the heating cable 18, and in an advantageous variant, a set of local temperatures TL-S along the pipe 16.

The temperature monitoring system 10 advantageously comprises a display 82 and a man-machine interface 84 or in variant, a communication interface with a master control system equipped with the display 82 and the man-machine interface 84.

The display 82, when present, is configured to display the results of the temperature calculations carried out by the calculator 80. It may as well display monitoring parameters measured by sensors of the sensor system 24.

The man-machine interface 84 for example comprises a touchscreen, a mouse, and/or a keyboard to allow an operator to interact with the calculator 80.

The calculator 80 has at least a processor 86, and at least a memory 88 comprising software modules configured to be executed by the processor 86 to implement functions of the modules which are described below.

In a variant, the calculator 80 is made of a Field Programmable Gate Array ("FPGA") or of a dedicated integrated circuit, such as an Application Specific Integrated Circuit ("ASIC") to implement functions of the modules which are described below.

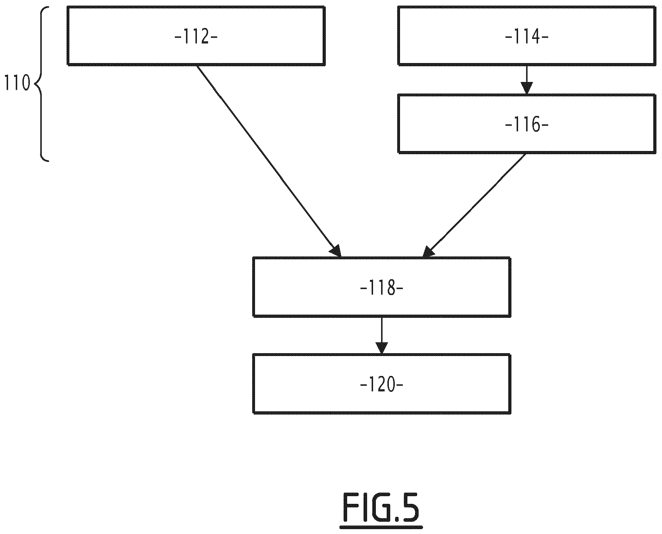

In the example of figure 1, the temperature monitoring system 10 comprises an electrical resistance determining module 90, to determine a measured global electrical resistance Rt of each heating cable 18, and a pipe global temperature calculation module 92, configured to calculate, via an electrical model, a measured global temperature T at the heating cable 18 within the pipe 16, from the measured global electrical resistance Rt determined by the electrical resistance determining module 90. The modules 90, 92 are thus configured to carry out a first temperature monitoring method according to the invention, as described in figure 5.

Advantageously, the temperature monitoring system 10 further comprises a punctual temperature acquisition module 94, configured to acquire at least a punctual fluid temperature measurement of the fluid at a particular point within the pipe 16, for example from at least one punctual temperature sensor 60A, 60B.

The temperature monitoring system 10 also advantageously comprises a thermal model implementation module 96. The thermal model implementation module 96 has a flow assurance model applicator 98, configured to determine at least a temperature and a phase composition in successive transverse sections S of the pipe 16, from the punctual temperature measurement acquired by the acquisition module 94. The temperature and phase distribution in each pipe section S are obtained for example after a shut-down of fluid flow in the pipe 16.

The thermal model implementation module 96 also has a heat transfer model applicator 100, configured to determine, in each successive pipe section S, a local temperature in regions of the pipe section S, from the fluid temperature and from the phase composition obtained from the flow assurance model applicator 98 using the heat transfer coefficients of the fluid contained in the pipe 16 and of the materials forming the layers of the pipe 16.

The heat transfer model applicator 100 is in particular configured to determine a local temperature of each heating cable 18 in each pipe section S along the pipe 16, referred to as THC-S in the description below.

As will be described below the local temperature THC-S is the local temperature of each heating cable 18 in each pipe section S which is calculated by the heat transfer model application 100 from the fluid temperature and from the phase composition obtained from the flow assurance model applicator 98 using the heat transfer coefficients of the fluid contained in the pipe 16 and of the materials forming the layers of the pipe 16.

Furthermore, the flow assurance model applicator 98 is configured to determine at least a temperature and a phase composition in successive transverse sections S of the pipe 16, from the punctual temperature measurement acquired by the acquisition module 94.

Therefore, the temperature THC-S is calculated by the thermal model implementation module 96 based on punctual fluid temperature measurements made by the punctual temperature acquisition module 94 (the output of module 94 is an input of module 96), for example based on temperature measurements made by the punctual temperature sensors 60A, 60B.

In a first embodiment shown in figure 4, the monitoring system 10 further comprises an electrical resistance integration module 102 to determine a calculated global electrical resistance Ra of each heating cable 18, using the heating cable 18 local temperature THC-S determined in the successive sections S of the heating cable 18 by the thermal model implementation module 96.

The monitoring system 10 also comprises an electrical resistance comparison module 104, configured to compare the measured global resistance Rt of each heating cable 18 determined by the electrical resistance determining module 90, using the electrical model, with the calculated global resistance Ra of each heating cable 18 obtained from the electrical resistance integration module 102 and to validate the local temperatures THC-S calculated along each heating line 18 by the thermal model implementation module 96 when a match is obtained.

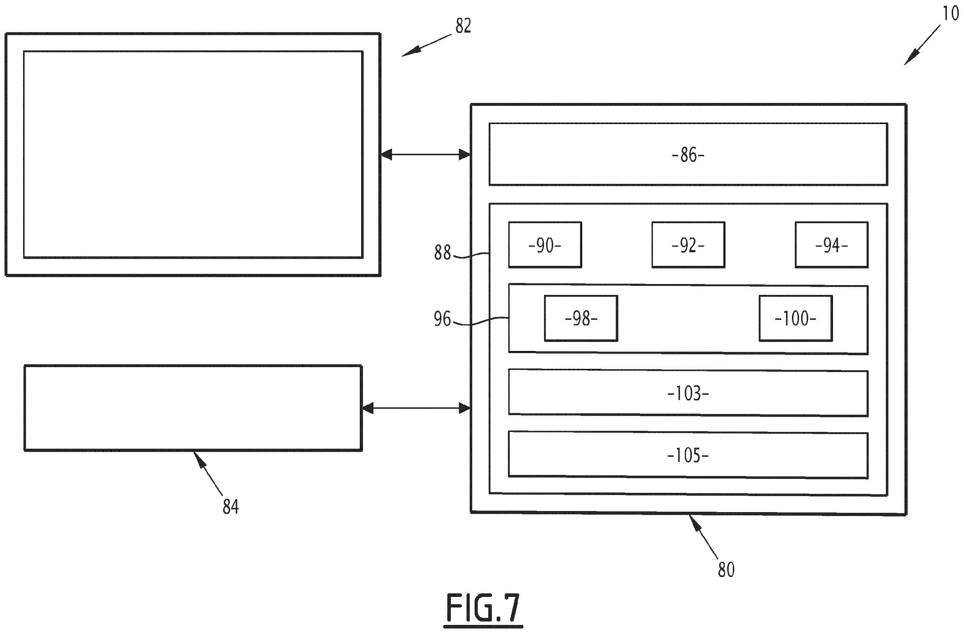

In another embodiment shown in figure 7, the monitoring system 10 comprises a temperature integration module 103 to determine, for each heating cable 18, a calculated global temperature THC, using the heating cable 18 local temperature THC-S determined in the successive sections S of the heating cable 18 by the thermal model implementation module 96.

The calculated global temperature THC of a heating cable 18 is for example determined by a weighted average of local temperatures THC-S determined in successive sections S of this heating cable 18 by the thermal model implementation module 96.

According to this other embodiment of the present invention, the monitoring system 10 comprises a temperature comparison module 105 configured to compare for each heating cable 18 the measured global temperature T of the heating cable with the calculated global temperature THC of the heating cable 18.

The measured global temperature T is an output of the pipe global temperature calculation module 92, and is calculated via an electrical model from the measured global electrical resistance Rt determined by the electrical resistance determining module 90.

When a match is obtained between the measured global temperature T and the calculated global temperature THC for each heating cable 18, the temperature comparison module 105 validates the local temperatures THC-S calculated along each heating line 18 by the thermal model implementation module 96.

A first method for monitoring a temperature within a pipe 16 configured to be heated by at least a heating cable 18 arranged along the pipe 16 will now be described, in reference to figure 5.

Initially, at step 110, a measurement of the global electrical resistance Rt of each heating cable 18 is carried out.

In a first embodiment, shown at step 112, advantageously carried out when the heating cable 18 is not energized, a direct measurement of the global electrical resistance Rt of the heating cable 18 is done.

The measurement is carried out with a dedicated measurement device which comprises a dedicated ohmmeter or which utilizes a two-wire or preferably a four-wire method using a source of continuous current, an ammeter and a voltmeter. A value of the heating cable 18 measured electrical resistance is thus obtained.

In a second embodiment, shown at step 114, a complex impedance measurement is conducted on the deenergized heating cable 18, with the use of an impedance analyzer or alternatively using a dedicating measurement setup using an alternative current source, and sensors to measure current, voltage, and phase shift within the heating cable 18.

In a variant, the voltage sensor 68 and the current sensor 70 of the protection device are used while the heating cable 18 is energized. The voltage, current, and phase shift are measured while the heating cable 18 is energized to obtain the complex impedance.

At step 116, the real part of the measured complex impedance is extracted, for example by the electrical resistance determining module 90 of the temperature monitoring system 10 to provide a measured electrical resistance.

At step 118, the electrical resistance determining module 90 acquires the measured electrical resistances values obtained from each heating cable 18.

In case several heating cables 18 are present, for example grouped in a bundle 50, especially if the bundle 50 is flat, electromagnetic interactions between the heating cables 18 each carrying one phase may lead to a slight difference in reaction of each phase. This resulting difference also affects the amount of heat dissipated in each heating cable 18.

In that case, the electrical resistance determining module 90 calculates a measured global electrical resistance Rt from the average of the measured electrical resistances of the different heating cables 18 within the bundle 50, or from the maximum electrical resistance among the different heating cables 18.

Moreover, in some instances, in particular when the pipe 16 is located in the body of water 14, an umbilical cable connects the electrical power source 20 to each feeder line 54. The measured electrical resistance of the heating cable 18 then inherently includes the electrical resistance of the umbilical cable.

The electrical resistance of the umbilical cable is advantageously taken into account as a constant by the electrical resistance determining module 90.

This is due in particular to the larger cross section of the conductor of umbilical compared to heating cables 18. Also, the umbilical cable is located directly in the body of water 14 which provides a cooling effect and a constant surrounding temperature.

The electrical resistance of the umbilical cable is thus significantly smaller, for example less than 10% of the electrical resistance of each heating cable 18 it is supplying power to.

Advantageously, the measured electrical resistance obtained at step 112 or at step 116 is corrected by subtraction of a constant nominal electrical resistance of the umbilical cable to obtain the measured global electrical resistance Rt of each heating cable 18. The constant nominal electrical resistance of the umbilical cable has been determined during the testing of the umbilical cable, or based on appropriate calibration procedures.

At step 120, the pipe global temperature calculating module 92 derives the global temperature T within the pipe 16 along the heating cable 18, using an electrical analytical model relating the measured global electrical resistance Rt of the heating cable 18, the length L of the heating cable 18, a line electrical resistance $R_0$ (in Ω/km) of the heating cable 18 at a predefined temperature To and a correction factor $\alpha$, which depends on on the nature of the metal constituting the heating cable 18.

For example, the pipe global temperature calculating module 92 is calculated using the following equation :

$$T = T_0 + \frac{1}{\alpha} \times \left( \frac{Rt}{R_0} - 1 \right) \quad (1)$$

For a heating cable 18 made of copper, $\alpha = 0.00393$ K$^{-1}$.

The measured global temperature T corresponds to a global temperature along the heating cable 18.

The first method according to the invention is therefore very useful to determine a global temperature information within a pipe 16, when the pipe 16 is not equipped with other means of measuring its temperature.

The first method according to the invention allows following the measured global temperature T along time, for example at intervals greater than 10 seconds (for example every 30 seconds) during thermal transients and greater than 1 minute (for example every 5 minutes) in thermal steady state, to determine whether evolutions of the global temperature T occur.

The first method according to the invention can easily be implemented on existing pipes 16 by carrying out an electrical resistance measurement of the or of each heating cable 18, either deenergized or energized.

The first method according to the invention can be simply implemented in case the pipe 16 is already equipped with the above-mentioned switching devices 56, a voltage sensor 68 and a current sensor 70 used for protection purposes, by simply acquiring the data obtained from the already installed voltage sensor 68 and current sensor 70.

The first method according to the invention is cost effective to implement as it does not require using any additional complex equipment including a fiber optic and as it can work simply on any pipe 16 equipped with at least one electric cable, in particular at least one heating cable 18.

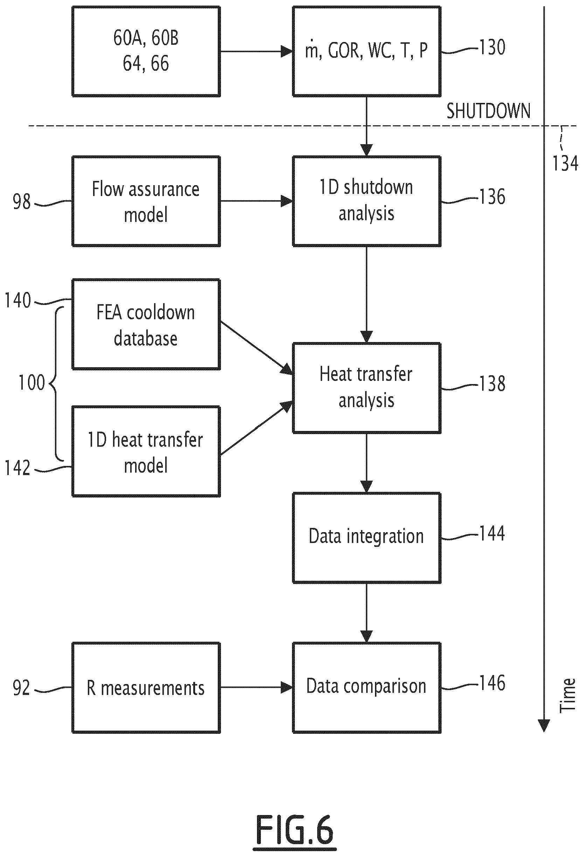

In a variant shown schematically in figure 6, further steps of the method are carried out after steps 110 to 120.

A first further step 130 comprises acquiring, with the sensor system 24, measured physical parameters along the pipe 16 during fluid production.

In particular, the acquisition module 94 continuously acquires temperature measurements TA, TB and, advantageously, pressure measurement PA, PB, from at least one punctual temperature and/or pressure sensor 60A, 60B, and preferably, an external temperature TW from the external temperature sensor 64.

The acquisition module 94 also continuously acquires the fluid flowrate ṁ within the pipe 16, the gas to oil ratio GOR, and the water cut WC of the fluid circulating in the pipe 16 from the multiphase flowmeter 66.

For example, the further steps of the variant method according to the invention are carried out after a fluid production shut-down 134, at which fluid production is stopped and the fluid flow ṁ becomes nil.

The acquisition module 94 then records, in particular at shut-down, at least one punctual temperature measurement TA-SD, at least one punctual pressure measurement PA-SD, for example the temperature and pressure measurement at sensor 60A, at least one gas to oil ratio GOR-SD, and at least one water cut WC-SD.

At step 136, the flow assurance model applicator 98 of the thermal model implementation module 96 is activated to determine a sectional one-dimensional analysis of the fluid contained in the pipe 16, in particular after shut-down.

The analysis using the flow assurance model applicator 98 is carried out in a series of successive adjacent transverse sections S of the pipe 16 along the pipe 16. For example, the number of sections S which are analyzed is greater than 10 sections per km, in particular comprised between 10 sections per km and 100 sections per km.

The flow assurance model applicator 98 determines, in each pipe section S, at least a fluid temperature dynamics TF-S , a fluid pressure dynamics PF-S, and a fluid phase composition dynamics PC-S. By temperature, pressure or fluid phase composition "dynamics", it is meant an evolution versus time of respectively temperature, pressure and fluid phase composition in the pipe section S.

The flow assurance model applicator 98 uses as inputs at least one punctual measured temperature TA-SD and pressure PA-SD and also, the measured gas to oil ratio GOR-SD and the measured water cut WC-SD. Other inputs are the external temperature TW, the pipe 16 structure and dimensions, including the heat transfer parameters of the materials forming the different layers of the pipe 16 and if applicable, the electrical power P provided by each heating cable 18.

The flow assurance model is for example a fluid mechanic and energetic model (FME) implemented in a software such as Ansys Fluent, Ansys Structural, or/and Comsol or a dynamic multiphase flow simulator which models transient flows, implemented in a software such as OLGA marketed by SCHLUMBERGER.

The flow assurance model applicator 98 thus outputs a set of fluid temperature TF-S, pressure PF-S and phase composition PC-S in successive sections S along the pipe 16 as a function of time.

At step 138, the heat transfer model applicator 100 calculates the local temperatures TL-S in each region of each section S of the pipe 16, based on the outputs obtained from the flow assurance model applicator 98. In particular, it determines, in each section S of the pipe 16, the temperature THC-S of the heating cable 18 in the pipe section S as a function of time.

In a first embodiment, the local temperatures TL-S are determined in each pipe section S using e.g. a finite element analysis (FEA) heat transfer database 140 or databases created with other methods (e.g. finite volume analysis (FVA), measurements).

The database 140 defines, for each set of a plurality of predefined sets of fluid temperature TF-S, fluid pressure PF-S, and fluid phase composition PC-S, a corresponding local temperature TL-S in each region in a section S of the pipe 16. Each region is for example a region of a layer of the pipe 16 in the pipe section S or a region of a heating bundle 50. The size of each region is generally defined using numerical analyses requirements dependent on the pipe 16. Generally, the maximum size of each region of a layer in a pipe section S does not exceed 1/4 of the layer thickness.

In order to build the database 140, a series of computations or measurements are carried out prior to the implementation of the method according to the invention with a engineering software such as Ansys, Comsol or/and Abaqus.

Each simulation is carried out with initial conditions corresponding to a particular set of fluid temperature TF-S, fluid pressure PF-S, and fluid phase composition PC-S. It uses the heat transfer parameters of the fluid and materials, obtained from the dimensions and material properties which constitute the different layers of the pipe 16 or the heating bundle 50 at different points in a model pipe section S. It also uses the electrical power P provided by each heating cable 18, if it is energized.

When the simulation is complete, the local temperature transient profile TL-S in all regions within the model pipe section S is determined for a particular predefined set of fluid temperature TF-S, fluid pressure PF-S, and fluid phase composition PC-S.

During step 138, for each pipe section S, the heat transfer model applicator 100 determines the predefined set in the database 140 having the predefined fluid temperature TF-S, fluid pressure PF-S, and fluid phase composition PC-S closest to the outputs of the flow assurance model applicator 98 for this section S, and uses the predefined set to determine the local temperatures TL-S in each region of the section S of the pipe 16, in particular the temperature THC-S of the heating cable 18 in the section S.

In a variant, the heat transfer model applicator 100 uses an analytical model 142, based for example on a thermal network fast working model or an electrical solver using electrical circuit elements to simulate thermal components of the system (for example heat capacity modeled as a capacitor, thermal conductance modeled as a conductance, temperature modeled as a voltage, heat flow or heat generated modeled as a current). Such a model is for example implemented with a software referred to as "SPICE".

Just as above, the analytical model provides, in each section S of the pipe 16, output parameters including local temperatures TL-S in each region of the pipe section S, in particular the temperature THC-S of the heating cable 18 in the pipe section S.

The input parameters of the analytical model are, just as above, a fluid temperature TF-S, a fluid pressure PF-S, and a fluid phase composition PC-S. Other inputs of the analytical model are the heat transfer parameters of the fluid and at different points in the pipe 16, obtained from the dimensions and materials which constitute the different layers of the pipe 16. Another input parameter is the electrical power P provided by each heating cable 18, if energized.

In a further variant, the thermal distribution model applicator 100 uses an artificial intelligence heat transfer model (not shown), for example based on neural networks.

The neural network for example comprises a multilayer perceptron network comprising an ordered succession of layers of neurons, each of which takes its inputs from the outputs of the previous layer.

More precisely, each layer comprises neurons taking their inputs from the outputs of the neurons in the previous layer, or from the input variables for the first layer.

Alternatively, more complex neural network structures can be envisaged with a layer that can be linked to a layer further away than the immediately preceding layer.

Each neuron is also associated with an operation, i.e. a type of processing, to be performed by said neuron within the corresponding processing layer.

Each layer is linked to the other layers by a plurality of synapses. A synaptic weight is associated with each synapse, and each synapse forms a link between two neurons. This is often a real number, taking on both positive and negative values. In some cases, the synaptic weight is a complex number.

Each neuron is able to perform a weighted sum of the value(s) received from the neurons of the preceding layer, each value then being multiplied by the respective synaptic weight of each synapse, or link, between said neuron and the neurons of the preceding layer, then to apply an activation function, typically a non-linear function, to said weighted sum, and to deliver at the output of said neuron, in particular to the neurons of the following layer connected to it, the value resulting from the application of the activation function.

The activation function introduces non-linearity into the processing performed by each neuron. The sigmoid function, the hyperbolic tangent function and the Heaviside function are examples of activation functions.

As an optional extra, each neuron is also able to apply a multiplicative factor, also known as bias, to the output of the activation function, and the value output by said neuron is then the product of the bias value and the value output by the activation function.

In complement or/and in variant, the neural network comprises a convolutional neural network and/or a recurrent neural network.

The input parameters of the neural network are for example a fluid temperature TF-S, a fluid pressure PF-S, a fluid phase composition PC-S, and potentially the electrical power P provided by each heating cable 18.

The output parameters of the neural network are for example local transient temperatures TL-S in each region of the pipe section S, in particular the temperature transient temperature profile THC-S of the heating cable 18 in the pipe section S.

The neural network is for example trained by running simulations. For example several simulations of a model pipe section S are run with e.g. a finite element analysis software such as Ansys, Comsol or/and Abaqus.

The input parameters correspond to a particular set of fluid temperature TF-S, fluid pressure PF-S, and fluid phase composition PC-S. An engineering software as afinite element analysis software uses the heat transfer parameters of the fluid and materials, obtained from the dimensions and material properties which constitute the different layers of the pipe 16 at different points in a model pipe section S, and potentially the electrical power P provided by each heating cable 18 if energized.

When the simulation is complete, the local transient temperature profile in all regions within the pipe section S is determined for the particular predefined set of fluid temperature TF-S, fluid pressure PF-S, and fluid phase composition PC-S.

The neural network model is then trained by inputting the different sets of input parameters of the different model pipe sections S and by fitting the results obtained from the neural network with each set of input parameters to the results obtained with e.g the finite element analysis software, adjusting the neural network parameters to obtain a fit.

Once the neural network model has been trained, for each section S, the heat transfer model applicator 100 runs the neural network model with the fluid temperature TF-S, the fluid pressure PF-S, and the fluid phase composition PC-S received from the flow assurance model applicator 98 for each pipe section S, and potentially, the electrical power P provided by each heating cable 18 if energized.

The heat transfer model applicator 100 outputs the local temperatures TL-S in each region of the pipe section S, in particular the temperature THC-S of the heating cable 18 in the section S.

At step 144, in a first embodiment carried out by the monitoring system 10 shown in figure 4, the electrical resistance integration module 102 calculates, from each local temperature THC-S of the heating cable 18 determined in each section S of the pipe 16, a corresponding local electrical resistance RL-S of each heating cable 18, using the electrical model by advantageously solving the above mentioned equation (1) in each section S.

Thus, a set of local electrical resistances RL-S of each heating cable 18 along the pipe is obtained.

Thereafter, the electrical resistance integration module 102 calculates a calculated global electrical resistance Ra along the pipe by averaging the local electrical resistances RL-S.

At step 146, the electrical resistance comparison module 104 acquires the value of the measured global electrical resistance Rt in each heating cable 18 from the global temperature calculation module 92. It then compares the value of the measured global temperature Rt of each heating cable 18 with the corresponding calculated global electrical resistance Ra of the same heating cable 18 obtained from the electrical resistance integration module 102 downstream of the thermal model implementation module 96.

For example, the electrical resistance comparison module 104 calculates a difference or a ratio between the two global electrical resistances Rt and Ra, and validates the set of local temperatures THC-S of the heating cable 18 along the pipe 16 determined with the thermal model implementation module 96, if the difference or the ratio is smaller than a predetermined threshold, for example less than 10% of the measured global electrical resistance.

If the difference exceeds the threshold, the temperature distribution obtained from the thermal model implementation module 96 is not validated, and the model is adjusted.

The adjustment is for example carried out during a temperature transient by shifting and/or scaling the time scale to match the evolution of the calculated global electrical resistance Ra versus time with the evolution of the measured global temperature Rt versus time.

At step 144, in a second embodiment carried out by the monitoring system 10 shown in figure 7, the temperature integration module 103 determines, for each heating cable 18, a calculated global temperature THC, using the heating cable 18 local temperature THC-S determined in the successive sections S of the heating cable 18 by the thermal model implementation module 96.

The calculated global temperature THC of a heating cable 18 is for example determined by a weighted average of local temperatures THC-S determined in successive sections S of this heating cable 18 by the thermal model implementation module 96.

At step 146, the temperature comparison module 105 acquires the value of the calculated global temperature THC in each heating cable 18 from the global temperature calculation module 92. It then compares the value of the measured global temperature T of the heating cable 18 with the calculated global temperature THC of the same heating cable 18 obtained from the temperature integration module 103 downstream of the thermal model implementation module 96.

For example, the temperature comparison module 105 calculates a difference or a ratio between the two global temperatures THC and T, and validates the set of local temperatures THC-S of the heating cable 18 along the pipe 16 determined with the thermal model implementation module 96, if the difference or the ratio is smaller than a predetermined threshold, for example less than 10% of the measured global electrical resistance.

If the difference exceeds the threshold, the temperature distribution obtained from the thermal model implementation module 96 is not validated, and the model is adjusted.

The adjustment is for example carried out during a temperature transient by shifting and/or scaling the time scale to match the evolution of the calculated global temperature THC versus time with the evolution of the measured global temperature T versus time

Thus, the method according to the invention allows the determination, in most cases, of a set of local temperatures THC-S of the heating cable 18 along the pipe 16, even if the pipe 16 is not instrumented with a fiber optic sensor, or any other distributed temperature sensing.

This determination can be carried out along time, for example at intervals greater than 10 seconds (for example every 30 seconds) during thermal transients and greater than 1 minute (for example every 5 minutes) in thermal steady state.

The set of local temperatures THC-S of the heating cable 18 can then be used to determine the fluid temperature in successive sections S along the pipe 16 to try to isolate potential flow assurance problems along the pipe 16.

The method uses thermal models and an electrical model to correlate the calculated global temperature THC to the measured global temperature T of the heating cable 18 or/and to correlate the calculated global electrical resistance Ra calculated using the thermal model implementation module 96 with the measured global temperature Rt measured directly from the electrical resistance determining module 90.

Thus, the temperature along the pipe 16 can be assessed quite precisely and without the need of having an optic fiber sensor or other distributed sensing system inserted in the pipe 16.

The method according to the invention can thus be used on existing non-instrumented pipes 16, to monitor fluid behavior within these pipes 16, or to alleviate potential problems with distributed temperature sensing such as a breaking of an optic fiber. It can even be used in a pipe 16 equipped with a DTS system to assess the accuracy of the DTS measurements, especially in case the optic fibers are located too close to the heating cables 18.

Then, the heating power provided by the or each heating cable 18 is optionally controlled using the global temperature T of the pipe 16 or/and the set of local temperatures THC-S along the pipe 16 obtained via the method according to the invention, to adjust the heat provided to the pipe 16 by each heating cable 18. This limits the risk of substantially increasing viscosity of the transported fluid or/and the risk of forming hydrate plugs within the pipe 16.

Additionally, this also limits the risk of overheating of the heating cables and splices, of the thermal insulation, centralizers etc.

In another variant, the pipe 16 is a flexible pipe, in particular built according with the standards API 17J (Specification for Unbonded Flexible Pipe, 4th edition - May 2014) and API RP 17B (Recommended Practice for Flexible Pipe, 5th edition - March 2014) established by the American Petroleum Institute. The flexible pipe is advantageously an unbonded pipe. At least two adjacent layers of the flexible pipe are free to move longitudinally with respect to each other during flexure of the flexible pipe.

Alternatively, the pipe 16 is a Hybrid Flexible Pipe (HFP), in particular built according with the standard DNV-ST-F119 (Thermoplastic Composite Pipes, Edition September 2019) established by the DNV (Det Norske Veritas) and previous API standards i.e. API 17J and API RP 17B. The hybrid flexible pipe is advantageously an unbonded flexible pipe. At least two adjacent layers of the hybrid flexible pipe are free to move longitudinally with respect to each other during flexure of the pipe.

Alternatively again, the pipe 16 is a steel/thermoplastic/composite tube electrohydraulic umbilical, and Integrated Service/Production Umbilical (ISU™ / IPU™).

The present invention is not limited to the use of heating cable as any electric cable arranged along the pipe could be used instead of a heating cable, even if this electric cable is not designed for an efficient active heating of the pipe.

The present invention would then also more generally concern a method of monitoring a temperature within a pipe arrangement comprising a pipe and at least one electric cable arranged along or inside the pipe, said electric cable being connected to an electrical power source, the method being carried out by a temperature monitoring system, the method comprising:

- determining a measured global electrical resistance (Rt) of the at least one electric cable ;
- calculating a measured global temperature (T) of the at least one electric cable within the pipe using the measured global electrical resistance (Rt) of the at least one electric cable and an electrical model of the at least one electric cable.

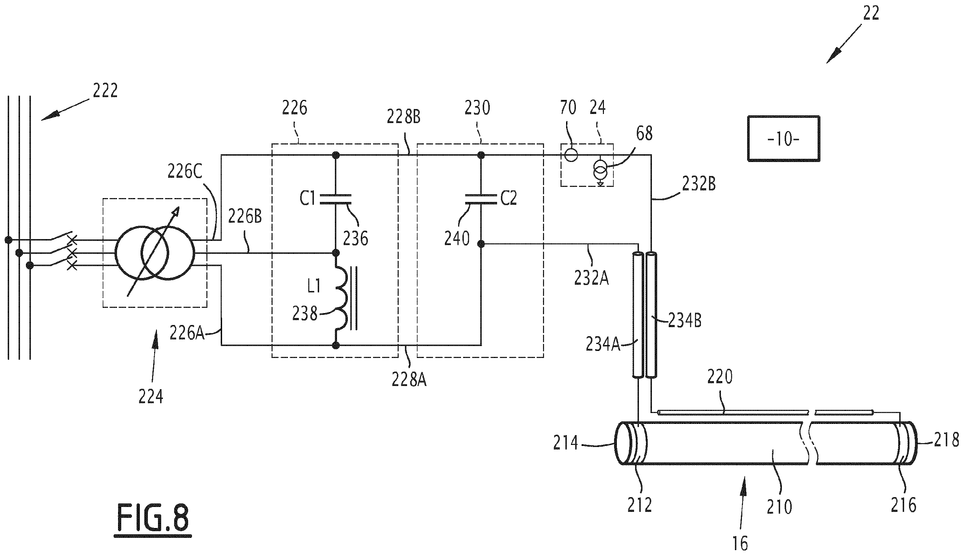

In a variant shown figure 8, the pipe 16 is a single rigid metallic pipe including for example a mechanically lined pipe (MLP) or a polymer lined pipe (PLP).

The pipe 16 is directly heated, i.e. through circulation of an electrical current along a conductive element here formed of a metallic tubular layer 210 of the pipe 16. The metallic tubular layer 210 is a flowline 30 in which the fluid is transported.

The pipe 16 is advantageously equipped with a first conductive bracket 212, advantageously located at or in the vicinity of a first end 214 of the pipe 16 and with a second conductive bracket 216, advantageously located at or in the vicinity of a second end 218 of the pipe 16.

The electrical power distribution system 22 is here connected to the first conductive bracket 212 to feed the electrical current in the metallic tubular layer 210 of the pipe 16 or/and to receive the electrical current from the metallic tubular layer 210. It has a piggy back cable 220 connected to the second conductive bracket 216, and advantageously extending along the pipe 16 while being isolated from the metallic tubular layer 210, to provide a separate path for the electrical current received from the metallic tubular layer 210 or/and fed to the metallic tubular layer 210.

In the particular example of figure 8, the electrical power distribution system 22 comprises a three phase electrical power cable 222 connected to the power source 20, and an intermediate power transformer 224 tapped on the three phase electrical power cable 222.

It advantageously comprises a symmetrization module 226 connected to three outlet phase lines 226A to 226C of the power transformer 224 and having two outlet lines 228A, 228B.

The electrical power distribution system 22 further comprises a power factor compensator 230 connected to the two outlet lines 228A, 228B.

The electrical power distribution system 22 also has two feeder lines 232A, 232B connected to the power factor compensator 230, the feeder lines 232A, 232B including umbilical cables 234A, 234B, connected to respectively the first conductive bracket 212 and to the second conductive bracket 216 via the piggy back cable 220.

The symmetrization module 226 comprises at least an inductance 238 connected to two phase lines 226A, 226B and to one outlet line 228A. It comprises a first capacitance 236 connected to a phase line 226B to which the inductance 238 is also connected, to a third phase line 226C to which the inductance 238 is not connected, and to another outlet line 228B.

The power factor compensator 230 comprises a second capacitance 240 connected via a first terminal to one outlet line 228A and to a first feeder line 232A and via a second terminal, to another outlet line 228B and to a second feeder line 232B.

At least one of the feeder lines 232A, 232B is equipped with a current sensor 70 and a voltage sensor 68 of the sensor system 24.

The monitoring system 10 is connected to the sensors 68, 70. It is identical to either of the monitoring systems 10 described in figures 4 or 7. It is configured to determine a measured global electrical resistance Rt of the metallic tubular layer 210 to calculate a measured global temperature T of the metallic tubular layer 210 within the pipe 16 using the measured global electrical resistance Rt and an electrical model of the at least one metallic tubular layer 210 and/or a set of local temperatures THC-S of the metallic tubular layer 210 in successive pipe sections S, as described above.

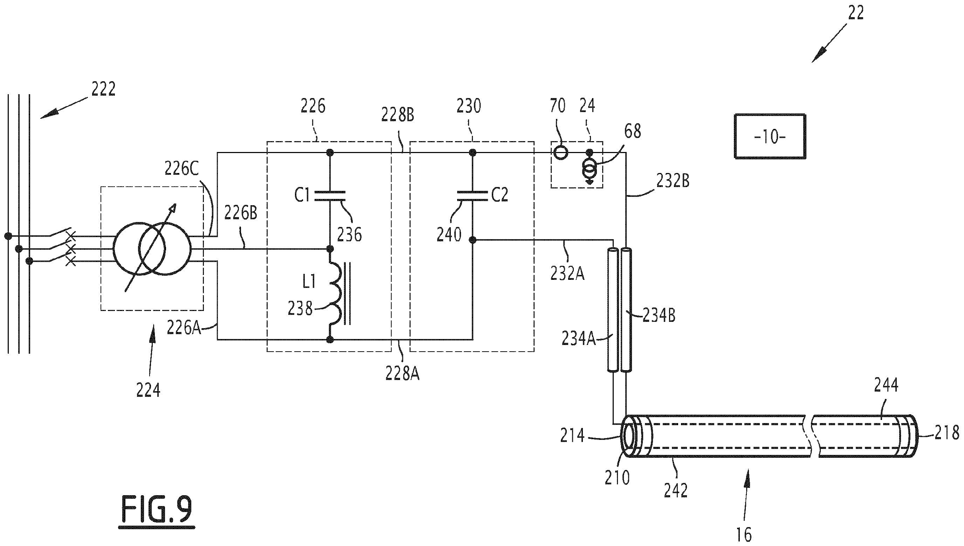

In a variant depicted in figure 9, the pipe 16 is a pipe-in-pipe having a second metallic tubular layer 242 being an outer carrier pipe 32. The pipe-in-pipe is for example as described above in Figure 2 and 3, but preferably, without heating cables 18.

The first feeder line 232A is here connected to the first metallic tubular layer 210 and the second feeder line 232B is connected to the second metallic tubular layer 242 both at or in the vicinity of the first end 214 of the pipe 16.

An electrical connection 244 between the first metallic tubular layer 210 and the second metallic tubular layer 242 is established away from the first end 214 of the pipe 16 preferably at or in the vicinity of the second end 218 of the pipe 16.

The electrical power distribution system 22 is without a piggy back cable 220.

The monitoring system 10 is identical to the monitoring system 10 described in figure 8.

## Claims

1. A method of monitoring a temperature within a pipe (16) using at least one conductive element extending along the pipe (16), in particular an electric cable (18) arranged along the pipe (16) or at least a tubular metallic layer (210, 242) of the pipe (16), the method being carried out by a temperature monitoring system (10), the method comprising:

   - determining a measured global electrical resistance (Rt) of the at least one conductive element;
   - calculating a measured global temperature (T) of the at least one conductive element within the pipe (16) using the measured global electrical resistance (Rt) of the at least one conductive element and an electrical model of the at least one conductive element.

2. The method according to claim 1, wherein the electrical model relates the measured global electrical resistance (Rt) of the at least one conductive element, a line electrical resistance ($R_0$) of the at least one conductive element at a predefined temperature ($T_0$) and a correction factor ($\alpha$), which depends on the nature of the material constituting the at least one conductive element.

3. The method according to claim 2, wherein the electrical model comprises the following equation :

$$T = T_0 + \frac{1}{\alpha} \times \left(\frac{Rt}{R_0} - 1\right) (1)$$

wherein $R_0$ is line electrical resistance of the at least one conductive element at the predefined temperature $T_0$,
calculating the global temperature (T) of the at least one conductive element comprising using said equation to determine the measured global temperature T.

4. The method according to any one of the preceding claims, wherein the pipe (16) comprises a plurality of electric cables (18), in particular three electric cables (18), determining a measured global electrical resistance (Rt) of the at least one conductive element comprising calculating an average of the measured electrical resistances of each of the plurality of electric cables (18) and setting the measured global electrical resistance of each conductive element to be equal to the average of the measured electrical resistances or comprising determining a maximum of the measured electrical resistances of each of the plurality of electric cables (18) and setting the measured global electrical resistance of each conductive element to be equal to the maximum of the measured electrical resistances.

5. The method according to any one of the preceding claims, wherein determining the measured global electrical resistance (Rt) comprises measuring an electrical resistance of the at least one conductive element with an electrical resistance measuring device while the at least one conductive element is deenergized.

6. The method according to any one of claims 1 to 4, wherein determining the measured global electrical resistance (Rt) comprises measuring an impedance of the at least one conductive element, advantageously while the at least one conductive element is energized, and extracting a real part of the measured impedance to obtain the measured global electrical resistance (Rt).

7. The method according to claim 6, wherein measuring the impedance comprises measuring a voltage applied to the at least one conductive element by a voltage sensor (68) interposed between a power source (20) and the at least one conductive element and measuring a current circulating in the at least one conductive element, using a current sensor (70) arranged between the power source (20) and the at least one conductive element.

8. The method according to any one of the preceding claims, comprising the following steps:

    - measuring at least a punctual fluid temperature (TA; TB) at one point of the pipe (16), in particular at one end of the pipe (16), using a temperature sensor (60A; 60B);
    - using at least one thermal model to determine a set of local temperatures (THC-S) of the at least one conductive element in successive pipe sections (S) along the pipe (16) from the at least one punctual fluid temperature (TA; TB).

9. The method according to claim 8, wherein the at least one thermal model comprises at least a flow assurance model configured to determine a fluid temperature (TF-S) and phase composition (PC-S) in each of the successive pipe sections (S) from the at least one punctual fluid temperature (TA; TB).

10. The method according to claim 9, wherein at least one thermal model comprises a heat transfer model configured to determine a local temperature (THC-S) of the at least one conductive element in each of the successive pipe sections (S) using the fluid temperature (TF-S) and phase composition (PC-S) in each of the successive pipe sections (S) determined by the flow assurance model.

11. The method according to claim 10, wherein the heat transfer model comprises a database (140) of finite elements analysis sets of local temperature (THC-S) of the at least one conductive element in relation to predefined fluid temperatures (TF-S) and phase compositions (PC-S), or comprises an analytical heat transfer model to determine a local temperature (THC-S) of the at least one conductive element in a pipe section (S) as a function of a given fluid temperature (TF-S) and phase composition (PC-S), or comprises a artificial intelligence heat transfer model determining a local temperature (THC-S) of the at least one conductive element in a pipe section (S) as a function of a given fluid temperature (TF-S) and phase composition (PC-S).

12. The method according to any one of claims 8 to 11, wherein using the at least one thermal model is done after a shut-down of fluid circulation in the pipe (16).

13. The method according to any one of claims 8 to 12, wherein the at least one thermal model uses a thermal power provided by the at least one conductive element when the at least one conductive element is energized.

14. The method according to any one of claims 8 to 13, comprising :

    - determining a calculated global temperature (THC) of the at least one conductive element of the at least one conductive element in each of the successive pipe sections (S) using the set of local temperatures (THC-S) of the at least one conductive element in successive pipe sections (S) along the pipe (16);
    - comparing the measured global temperature (T) of the at least one conductive element with the calculated global temperature (THC) of the at least one conductive element or comprising:

        - calculating a set of local electrical resistances (RL-S) of the at least one heating cable (18) in each successive pipe section (S) along the pipe (16) using the local temperature (THC-L) of the at least one heating cable (18) in the pipe section (S) determined by the at least one thermal model and an electrical model;

- integrating the set of local electrical resistances (RL-S) to determine a calculated global electrical resistance (Ra) of the at least one heating cable (18);

- comparing the calculated global electrical resistance (Ra) with the measured global electrical resistance (Rt) of the at least one heating cable (18).

15. The method according to any one of the preceding claims, wherein the pipe (16) is without a distributed temperature sensor, in particular without an optic fiber distributed temperature sensor.

16. The method according to any one of the preceding claims, wherein the electric cable is a heating cable (18), the at least one conductive element being configured to be connected to an electrical power source (20) to be energized.

17. A system (10) to monitor a temperature within a pipe (16) comprising at least one conductive element arranged along the pipe (16), in particular an electric cable (18) arranged along the pipe (16) or at least a tubular metallic layer (210, 242) of the pipe (16), the system (10) comprising:

- an electrical resistance determining module (90) configured to determine a measured global electrical resistance (Rt) of the at least one conductive element;

- a global temperature calculating module (92) configured to calculate a measured global temperature (T) of the at least one conductive element within the pipe (16) using the measured global electrical resistance (Rt) of the at least one conductive element and an electrical model of the at least one conductive element.

18. The system (10) according to claim 17, comprising:

- a punctual temperature acquisition module (94) configured to acquire at least a measured punctual fluid temperature (TA; TB) at one point of the pipe (16), in particular at one end of the pipe (16), using a temperature sensor (60A; 60B);

- a thermal model implementation module (96) configured to use at least one thermal model to determine a set of local temperatures (THC-S) of the at least one conductive element in successive pipe sections (S) along the pipe (16) from the at least one punctual fluid temperature (TA; TB); the system (10) comprising at least one of :

- an electrical resistance integration module (100) configured to calculate a set of local electrical resistances (RL-S) of the at least one conductive element in each successive pipe section (S) along the pipe (16) using the local temperature (THC-S) of the at least one conductive element in the pipe section (S) determined by the at least one thermal model and an electrical model, the electrical resistance integration module (100) being configured to integrate the set of local electrical resistances (RL-S) to determine a calculated global electrical resistance (Ra) of the at least one conductive element;

- an electrical resistance comparison module (104) configured to compare the calculated global electrical resistance (Ra) with the measured global electrical resistance (Rt) of the at least one conductive element; or

- a temperature integration module (103) configured to determine a calculated global temperature (THC) of the at least one conductive element, using a set of local temperatures (THC-S) of the at least one conductive element in successive pipe sections (S) along the pipe (16) determined by the at least one thermal model;

- a temperature comparison module (105) configured to compare the calculated global temperature (THC) with the measured global temperature (T) of the at least one conductive element.

19. An installation (12), in particular an offshore fluid exploitation installation, comprising a pipe (16), at least one conductive element arranged along the pipe (16), the installation (12) comprising a temperature monitoring system (10) according to any one of claims 17 to 18, and optionally wherein the at least one conductive element is a heating cable (18) configured to heat the pipe (16), the installation (12) optionally comprising a power source (20), the at least one heating cable (18) being connected to the power source (20).

FIG.1

FIG.2

FIG.3

FIG.4

EP 4 660 597 A1

FIG.5

FIG.6

FIG.7

EP 4 660 597 A1

FIG.8

FIG.9

**EUROPEAN SEARCH REPORT**

Application Number

EP 24 30 5903

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/333725 A1 (SCHMIDT ALEXANDER [DE]) 20 October 2022 (2022-10-20) * abstract * * figures 1-3 * * paragraphs [0013], [0030] - [0040] * ----- | 1-13, 15-17,19 | INV. G01K7/16 G01K7/42 G01K13/02 |
| X | US 2020/383177 A1 (PETERSON NICHOLAS P [US] ET AL) 3 December 2020 (2020-12-03) * abstract * * figures 1, 2 * * paragraphs [0012] - [0041] * ----- | 1-13, 15-17,19 | |
| X | US 2007/108201 A1 (VINEGAR HAROLD J [US] ET AL) 17 May 2007 (2007-05-17) * abstract * * figures 1, 2, 22,42-74, 166-196, * * paragraphs [0311] - [1089] * ----- | 1-13, 15-17,19 | |
| A | EP 2 597 253 A1 (SCHLUMBERGER SERVICES PETROL [FR] ET AL.) 29 May 2013 (2013-05-29) * abstract * * figures 1-4 * * paragraphs [0018] - [0063] * ----- | 1-19 | TECHNICAL FIELDS SEARCHED (IPC) G01K F16L H05B |

The present search report has been drawn up for all claims

| Place of search | Date of completion of the search | Examiner |
|---|---|---|
| The Hague | 15 November 2024 | Totò, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 24 30 5903

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2024

| Patent document cited in search report | Publication date | Patent family member(s) | | Publication date |
|---|---|---|---|---|
| US 2022333725 A1 | 20-10-2022 | CN | 114341605 A | 12-04-2022 |
| | | DE | 102019213235 A1 | 04-03-2021 |
| | | EP | 4025816 A1 | 13-07-2022 |
| | | US | 2022333725 A1 | 20-10-2022 |
| | | WO | 2021043598 A1 | 11-03-2021 |
| US 2020383177 A1 | 03-12-2020 | CN | 113906826 A | 07-01-2022 |
| | | EP | 3953634 A1 | 16-02-2022 |
| | | US | 2020383177 A1 | 03-12-2020 |
| | | WO | 2020243439 A1 | 03-12-2020 |
| US 2007108201 A1 | 17-05-2007 | AT | E427410 T1 | 15-04-2009 |
| | | AT | E434713 T1 | 15-07-2009 |
| | | AT | E435964 T1 | 15-07-2009 |
| | | AT | E437290 T1 | 15-08-2009 |
| | | AT | E463658 T1 | 15-04-2010 |
| | | AU | 2006239886 A1 | 02-11-2006 |
| | | AU | 2006239958 A1 | 02-11-2006 |
| | | AU | 2006239961 A1 | 02-11-2006 |
| | | AU | 2006239962 A1 | 02-11-2006 |
| | | AU | 2006239963 A1 | 02-11-2006 |
| | | AU | 2006239996 A1 | 02-11-2006 |
| | | AU | 2006239997 A1 | 02-11-2006 |
| | | AU | 2006239999 A1 | 02-11-2006 |
| | | AU | 2006240033 A1 | 02-11-2006 |
| | | AU | 2006240043 A1 | 02-11-2006 |
| | | AU | 2006240173 A1 | 02-11-2006 |
| | | AU | 2006240175 A1 | 02-11-2006 |
| | | AU | 2011201030 A1 | 31-03-2011 |
| | | CA | 2605720 A1 | 02-11-2006 |
| | | CA | 2605724 A1 | 02-11-2006 |
| | | CA | 2605729 A1 | 02-11-2006 |
| | | CA | 2605737 A1 | 02-11-2006 |
| | | CA | 2606165 A1 | 02-11-2006 |
| | | CA | 2606176 A1 | 02-11-2006 |
| | | CA | 2606181 A1 | 02-11-2006 |
| | | CA | 2606210 A1 | 02-11-2006 |
| | | CA | 2606216 A1 | 02-11-2006 |
| | | CA | 2606217 A1 | 02-11-2006 |
| | | CA | 2606218 A1 | 02-11-2006 |
| | | CA | 2606295 A1 | 02-11-2006 |
| | | CN | 101163780 A | 16-04-2008 |
| | | CN | 101163851 A | 16-04-2008 |
| | | CN | 101163852 A | 16-04-2008 |
| | | CN | 101163853 A | 16-04-2008 |
| | | CN | 101163854 A | 16-04-2008 |

EPO FORM P0459

For more details about this annex : see Official Journal of the European Patent Office, No. 12/82

page 1 of 4

## ANNEX TO THE EUROPEAN SEARCH REPORT
## ON EUROPEAN PATENT APPLICATION NO.

EP 24 30 5903

15-11-2024

| Patent document cited in search report | Publication date | Patent family member(s) | | Publication date |
|---|---|---|---|---|
| | | CN | 101163855 A | 16-04-2008 |
| | | CN | 101163856 A | 16-04-2008 |
| | | CN | 101163857 A | 16-04-2008 |
| | | CN | 101163858 A | 16-04-2008 |
| | | CN | 101163859 A | 16-04-2008 |
| | | CN | 101163860 A | 16-04-2008 |
| | | CN | 101300401 A | 05-11-2008 |
| | | EA | 200702296 A1 | 28-04-2008 |
| | | EA | 200702297 A1 | 28-04-2008 |
| | | EA | 200702298 A1 | 28-04-2008 |
| | | EA | 200702299 A1 | 28-04-2008 |
| | | EA | 200702300 A1 | 28-04-2008 |
| | | EA | 200702301 A1 | 28-04-2008 |
| | | EA | 200702302 A1 | 28-04-2008 |
| | | EA | 200702303 A1 | 28-04-2008 |
| | | EA | 200702304 A1 | 28-02-2008 |
| | | EA | 200702305 A1 | 28-02-2008 |
| | | EA | 200702306 A1 | 28-02-2008 |
| | | EA | 200702307 A1 | 28-02-2008 |
| | | EP | 1871858 A2 | 02-01-2008 |
| | | EP | 1871978 A1 | 02-01-2008 |
| | | EP | 1871979 A1 | 02-01-2008 |
| | | EP | 1871980 A1 | 02-01-2008 |
| | | EP | 1871981 A1 | 02-01-2008 |
| | | EP | 1871982 A1 | 02-01-2008 |
| | | EP | 1871983 A1 | 02-01-2008 |
| | | EP | 1871985 A1 | 02-01-2008 |
| | | EP | 1871986 A1 | 02-01-2008 |
| | | EP | 1871987 A1 | 02-01-2008 |
| | | EP | 1871990 A1 | 02-01-2008 |
| | | EP | 1880078 A1 | 23-01-2008 |
| | | IL | 186203 A | 29-12-2011 |
| | | IL | 186204 A | 28-06-2012 |
| | | IL | 186205 A | 28-06-2012 |
| | | IL | 186206 A | 29-12-2011 |
| | | IL | 186207 A | 29-12-2011 |
| | | IL | 186208 A | 30-11-2011 |
| | | IL | 186209 A | 24-03-2013 |
| | | IL | 186210 A | 31-10-2011 |
| | | IL | 186211 A | 29-12-2011 |
| | | IL | 186212 A | 31-08-2014 |
| | | IL | 186213 A | 31-08-2011 |
| | | IL | 186214 A | 29-12-2011 |
| | | IN | 266867 B | 10-06-2015 |
| | | MA | 29468 B1 | 02-05-2008 |
| | | MA | 29469 B1 | 02-05-2008 |

EPO FORM P0459

page 2 of 4

## ANNEX TO THE EUROPEAN SEARCH REPORT
## ON EUROPEAN PATENT APPLICATION NO.

EP 24 30 5903

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2024

| Patent document cited in search report | Publication date | Patent family member(s) | Publication date |
|---|---|---|---|
| | | MA 29470 B1 | 02-05-2008 |
| | | MA 29471 B1 | 02-05-2008 |
| | | MA 29472 B1 | 02-05-2008 |
| | | MA 29473 B1 | 02-05-2008 |
| | | MA 29474 B1 | 02-05-2008 |
| | | MA 29475 B1 | 02-05-2008 |
| | | MA 29476 B1 | 02-05-2008 |
| | | MA 29477 B1 | 02-05-2008 |
| | | MA 29478 B1 | 02-05-2008 |
| | | MA 29719 B1 | 01-09-2008 |
| | | NZ 562239 A | 28-01-2011 |
| | | NZ 562240 A | 29-10-2010 |
| | | NZ 562241 A | 24-12-2010 |
| | | NZ 562242 A | 24-12-2010 |
| | | NZ 562243 A | 24-12-2010 |
| | | NZ 562244 A | 24-12-2010 |
| | | NZ 562247 A | 29-10-2010 |
| | | NZ 562248 A | 28-01-2011 |
| | | NZ 562249 A | 26-11-2010 |
| | | NZ 562250 A | 24-12-2010 |
| | | NZ 562251 A | 30-09-2011 |
| | | NZ 562252 A | 31-03-2011 |
| | | US 2007108201 A1 | 17-05-2007 |
| | | WO 2006115943 A1 | 02-11-2006 |
| | | WO 2006115945 A1 | 02-11-2006 |
| | | WO 2006116078 A1 | 02-11-2006 |
| | | WO 2006116087 A1 | 02-11-2006 |
| | | WO 2006116092 A1 | 02-11-2006 |
| | | WO 2006116095 A1 | 02-11-2006 |
| | | WO 2006116096 A1 | 02-11-2006 |
| | | WO 2006116097 A1 | 02-11-2006 |
| | | WO 2006116130 A1 | 02-11-2006 |
| | | WO 2006116131 A1 | 02-11-2006 |
| | | WO 2006116133 A1 | 02-11-2006 |
| | | WO 2006116207 A2 | 02-11-2006 |
| | | ZA 200708020 B | 25-09-2008 |
| | | ZA 200708021 B | 29-10-2008 |
| | | ZA 200708022 B | 29-10-2008 |
| | | ZA 200708023 B | 28-05-2008 |
| | | ZA 200708087 B | 29-10-2008 |
| | | ZA 200708088 B | 29-10-2008 |
| | | ZA 200708089 B | 29-10-2008 |
| | | ZA 200708090 B | 29-10-2008 |
| | | ZA 200708134 B | 29-10-2008 |
| | | ZA 200708135 B | 29-10-2008 |
| | | ZA 200708136 B | 25-09-2008 |

EPO FORM P0459

For more details about this annex : see Official Journal of the European Patent Office, No. 12/82

page 3 of 4

## ANNEX TO THE EUROPEAN SEARCH REPORT
## ON EUROPEAN PATENT APPLICATION NO.

EP 24 30 5903

15-11-2024

| Patent document cited in search report | | Publication date | Patent family member(s) | | Publication date |
|---|---|---|---|---|---|
| | | | ZA | 200708137 B | 29-10-2008 |
| | | | ZA | 200708316 B | 27-05-2009 |
| EP 2597253 | A1 | 29-05-2013 | CN | 103132990 A | 05-06-2013 |
| | | | EP | 2597253 A1 | 29-05-2013 |
| | | | US | 2013132050 A1 | 23-05-2013 |

For more details about this annex : see Official Journal of the European Patent Office, No. 12/82

page 4 of 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Specification for Unbonded Flexible Pipe. May 2014

- Recommended Practice for Flexible Pipe. March 2014